# EUROPEAN PATENT APPLICATION

(11) **EP 4 708 628 A1**
(43) Date of publication of application: **11.03.2026**
(21) Application number: 25192785.1
(22) Date of filing: 30.07.2025
(51) Int. Cl.: H02J 7/80

(54) **BATTERY MODULE AND METHOD FOR CELL BALANCING OF BATTERY MODULE**

(30) Priority: 10.09.2024 KR 20240123163
(71) Applicant: SAMSUNG SDI CO., LTD., Yongin-si, Gyeonggi-do 17084 (KR)
(72) Inventor: KANG, Taehyeon, 17084 Yongin-Si (KR)
(74) Representative: Marks & Clerk LLP

(57) **Abstract**

A battery module may include battery cells, two sensors connected to the battery cells and configured to generate voltage data, an analog front-end integrated circuit (AFE IC) connected to the sensors and configured to generate a (1-1)-th and (1-2)-th control signal based on the voltage data, a (1-1)-th switching element connected to a first battery cell and the AFE IC and configured to perform an on/off operation based on the (1-1)-th control signal, a (1-2)-th switching element connected to a second battery cell and the AFE IC and configured to perform an on/off operation based on the (1-2)-th control signal, a microcontroller unit (MCU) connected to the AFE IC, and a cell balancing circuit connected to the (1-1)-th switching element and the (1-2)-th switching element and configured to perform balancing on the battery cells according to the on/off operations of the (1-1)-th switching element and the (1-2)-th switching element.

## Description

### FIELD

Aspects of embodiments of the present disclosure relate to a battery module and a method for cell balancing of a battery module.

### BACKGROUND

Secondary batteries are rechargeable batteries, which refer to batteries that can be charged and discharged multiple times. These secondary batteries are mainly used in various applications such as electronic products (smartphones, laptops, tablets, etc.), electric vehicles, photovoltaics, and emergency power supplies. In particular, lithium-ion batteries have a high energy density and a high charge/discharge efficiency and thus are used in various electronic products and electric vehicles.

The above information disclosed in this Background section is for enhancement of understanding of the background of the present disclosure, and therefore, it may contain information that does not constitute related (or prior) art.

### SUMMARY

The present disclosure provides a battery module that implements active cell balancing by utilizing an analog front-end integrated circuit and a switching element, and a method for cell balancing of a battery module to solve some problems described herein.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

According to some embodiments of the present disclosure, a battery module may include a plurality of battery cells, a first sensor and a second sensor connected to a first battery cell and a second battery cell of the plurality of battery cells and configured to generate voltage data, an analog front-end integrated circuit (AFE IC) connected to the first sensor and the second sensor and configured to generate a (1-1)-th control signal and a (1-2)-th control signal based on the voltage data, a (1-1)-th switching element connected to the first battery cell and the AFE IC and configured to perform an on/off operation based on the (1-1)-th control signal, a (1-2)-th switching element connected to the second battery cell and the AFE IC and configured to perform an on/off operation based on the (1-2)-th control signal, a microcontroller unit (MCU) connected to the AFE IC, and a cell balancing circuit connected to the (1-1)-th switching element and the (1-2)-th switching element and configured to perform balancing on the plurality of battery cells according to the on/off operations of the (1-1)-th switching element and the (1-2)-th switching element.

According to some embodiments of the present disclosure, the AFE IC may include a (2-1)-th switching element configured to generate the (1-1)-th control signal while repetitively turning on and off, a (2-2)-th switching element configured to generate the (1-2)-th control signal while repetitively turning on and off, an analog-to-digital converter (ADC) configured to convert voltage data received from the first sensor and the second sensor into digital signals, a communication unit configured to transmit the digital signals received from the ADC to the MCU and receive a (2-1)-th control signal and a (2-2)-th control signal that control the (2-1)-th switching element and the (2-2)-th switching element from the MCU; and a control unit configured to control the (2-1)-th switching element and the (2-2)-th switching element based on the (2-1)-th control signal and the (2-2)-th control signal received from the MCU.

According to some embodiments of the present disclosure, the MCU may receive the digital signals from the communication unit of the AFE IC, detect a voltage imbalance state among the plurality of battery cells based on the received digital signals, calculate required voltage data for each battery cell for balancing among the plurality of battery cells based on the detected imbalance state, and generate and transmit the (2-1)-th control signal and the (2-2)-th control signal to the communication unit of the AFE IC, based on the calculated required voltage data.

According to some embodiments of the present disclosure, the (1-2)-th switching element may include a MOSFET (metal-oxide-semiconductor field-effect transistor), and the (1-2)-th control signal may be applied to a gate terminal of the (1-2)-th switching element.

According to some embodiments of the present disclosure, a drain terminal of the MOSFET may be connected to a cathode terminal of the second battery cell, the second sensor, and one end of the (2-2)-th switching element by way of the cell balancing circuit.

According to some embodiments of the present disclosure, a source terminal of the MOSFET may be connected to an anode terminal of the second battery cell and the first sensor.

According to some embodiments of the present disclosure, a gate terminal of the MOSFET may be connected to the other end of the (2-2)-th switching element.

According to some embodiments of the present disclosure, one end of the (2-2)-th switching element may be connected to a cathode terminal of the second battery cell and the second sensor, and may be connected to one end of the (1-2)-th switching element by way of the cell balancing circuit.

According to some embodiments of the present disclosure, the other end of the (2-2)-th switching element may be connected to the other end of the (1-2)-th switching element.

According to some embodiments of the present disclosure, the cell balancing circuit may include an isolated DC-DC converter.

According to some embodiments of the present disclosure, detecting the voltage imbalance state among the plurality of battery cells may include determining a particular battery cell having the highest voltage out of the plurality of battery cells.

According to some embodiments of the present disclosure, calculating the required voltage data for each battery cell may include calculating required voltage data for the rest of the battery cells to equalize voltages of the plurality of battery cells by distributing energy of the particular battery cell having the highest voltage to the rest of the battery cells.

According to some embodiments of the present disclosure, the (1-2)-th control signal may include a PWM (pulse-width modulation) signal, and the (2-2)-th control signal may control a duty cycle of the PWM signal generated by the (2-2)-th switching element.

According to some embodiments of the present disclosure, the (1-2)-th switching element may control an input/output voltage ratio of the cell balancing circuit based on the duty cycle of the (1-2)-th control signal.

According to some embodiments of the present disclosure, a magnitude of the PWM signal may be equal to a magnitude of a voltage of the second battery cell.

According to some embodiments of the present disclosure, the (1-2)-th control signal may include a pulse-frequency modulation (PFM) signal, and the (2-2)-th control signal controls a frequency of the PFM signal generated by the (2-2)-th switching element.

According to some embodiments of the present disclosure, a method for cell balancing may include generating, by a first sensor and a second sensor connected to a first battery cell and a second battery cell of a plurality of battery cells, voltage data, generating, by an analog front-end integrated circuit (AFE IC) connected to the first sensor and the second sensor, a (1-1)-th control signal and a (1-2)-th control signal based on the voltage data, performing, by a (1-1)-th switching element connected to the first battery cell and the AFE IC, an on/off operation based on the (1-1)-th control signal, performing, by a (1-2)-th switching element connected to the second battery cell and the AFE IC, an on/off operation based on the (1-2)-th control signal, and performing, by a cell balancing circuit connected to the (1-1)-th switching element and the (1-2)-th switching element, balancing on the plurality of battery cells according to the on/off operations of the (1-1)-th switching element and the (1-2)-th switching element.

According to some embodiments of the present disclosure, the generating of the (1-1)-th control signal and the (1-2)-th control signal may include converting, by an analog-to-digital converter (ADC) included in the AFE IC, voltage data received from the first sensor and the second sensor into digital signals, generating, by the MCU, a (2-1)-th control signal and a (2-2)-th control signal based on the digital signals, generating, by a (2-1)-th switching element included in the AFE IC, the (1-1)-th control signal while repetitively turning on and off based on the (2-1)-th control signal, and generating, by a (2-2)-th switching element included in the AFE IC, the (1-2)-th control signal while repetitively turning on and off based on the (2-2)-th control signal.

According to some embodiments of the present disclosure, the generating of the (2-1)-th control signal and the (2-2)-th control signal may include detecting a voltage imbalance state among the plurality of battery cells based on the digital signals, calculating required voltage data for each battery cell for balancing among the plurality of battery cells based on the detected imbalance state, and generating the (2-1)-th control signal and the (2-2)-th control signal based on the calculated required voltage data.

According to some embodiments of the present disclosure, the (1-2)-th control signal may include a PWM (pulse-width modulation) signal, the (2-2)-th control signal controls a duty cycle of the (1-2)-th control signal, and the (1-2)-th switching element controls an input/output voltage ratio of the cell balancing circuit based on the duty cycle of the (1-2)-th control signal.

According to some embodiments of the present disclosure, by utilizing the PWM signal generated by the analog front-end integrated circuit as a control signal for the switching elements connected outside the analog front-end integrated circuit, active balancing with high efficiency can be realized, and heat generation and noise of the analog front-end integrated circuit can be controlled effectively. The reduced heat generation also improves safety of operation of the battery module, including when forming a battery pack or energy storage system (ESS) by connecting the plurality of battery modules. Accordingly, a switching control method can be selected freely through the analog front-end integrated circuit, and a balancing circuit design utilizing various types of DC-DC converters can be possible. Further, battery cell parameters can be measured accurately through electrochemical impedance spectroscopy (EIS), and battery cell voltage can be monitored accurately.

According to some embodiments of the present disclosure, as active balancing is realized through the on/off operations of the switching elements connected to each of the plurality of battery cells, local balancing of desired battery cells can be realized, and the balancing speed can be controlled flexibly. Accordingly, a power semiconductor capable of controlling the balancing of a plurality (e.g., 20 or more) battery cells at once can be realized. Furthermore, heat generation and loss during the switching operation of the switching elements can be minimized through the balancing of the battery cell units.

According to some embodiments of the present disclosure, because each analog front-end integrated circuit connected to a plurality of battery cell units can sense the voltages of the plurality of battery cells, loss due to the detection of the operating state of the plurality of battery modules can be minimized. Accordingly, when forming a battery pack or ESS by connecting the plurality of battery modules according to some embodiments of the present disclosure, the circuit design cost and time for each module can be reduced, and active balancing can be realized with a simple structure.

The cell balancing method and apparatus disclosed herein enables active balancing with improvements as compared to passive balancing processes. In passive balancing excess energy is dissipated from high-SOC cells via resistors, resulting in high energy loss and significant heat generation. The disclosed method and apparatus enables active cell balancing that balances of energy from high-SOC to low-SOC cells so as to minimize energy loss, improve efficiency and extend the lifespan of the battery module and its components.

At least some of the above and other features of the invention are set out in the claims.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a configuration diagram of a battery management system according to some embodiments of the present disclosure.
FIG. 2 is a diagram schematically showing the structure of a battery module according to some embodiments of the present disclosure.
FIG. 3 is a diagram schematically showing the structure of an analog front-end integrated circuit and a microcontroller unit in a battery module according to some embodiments of the present disclosure.
FIG. 4 is a diagram schematically showing a mechanism by which an analog front-end integrated circuit generates a (1-2)-th control signal according to some embodiments of the present disclosure.
FIG. 5 is a diagram schematically showing a battery module including a unit cell balancing circuit according to some embodiments of the present disclosure.
FIG. 6 is a diagram schematically showing a battery module including a unit cell balancing circuit according to some embodiments of the present disclosure.
FIG. 7 is a diagram showing the mechanism of active cell balancing realized by a battery module according to some embodiments of the present disclosure.
FIG. 8 is a flowchart showing a cell balancing method according to some embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects and features of the present disclosure. Accordingly, it should be understood that there may be various equivalents and modifications that can replace or modify the embodiments described herein at the time of filing this application.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C", "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Throughout the specification, unless otherwise stated, each element may be singular or plural.

Arranging an arbitrary element "above (or below)" or "on (or under)" another element may mean that the arbitrary element may be disposed in contact with the upper (or lower) surface of the element, and another element may also be interposed between the element and the arbitrary element disposed on (or under) the element.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements. In addition, it will be understood that when a component is referred to as being "linked," "coupled," or "connected" to another component, the elements may be directly "coupled," "linked" or "connected" to each other, or another component may be "interposed" between the components.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present disclosure, the sizes and relative sizes of the layers and areas shown in the drawings may have been exaggerated for clarity of description. That is, the sizes shown in the drawings are merely for ease of understanding and are not limited thereto. Further, the same reference numerals refer to the same components throughout the specification.

The terms used in this specification are intended to describe embodiments of the present disclosure and are not intended to limit the present disclosure. Further, the same reference numerals refer to the same components throughout the specification.

For a lithium-ion battery module formed by having multiple secondary batteries, multiple lithium-ion battery cells connected in series, the charge state of the battery cells tends to change over time due to various factors. If this charge state discrepancy accumulates, the charge capacity of the battery module may fall short of the rated charge capacity. Further, if one battery cell in the battery module reaches the lower voltage limit before the other battery cells, the battery module can no longer be used, which may shorten the usage time of the battery module. Accordingly, a cell balancing technique for equalizing the deviation in electric energy among the battery cells during the charging and discharging of the battery module may be utilized. In particular, active cell balancing can improve the usage time of the battery module by supplying the electric energy of battery cells having a higher electric energy to battery cells having a lower electric energy.

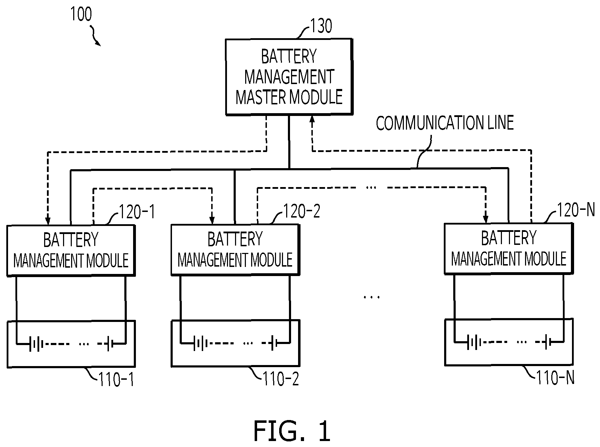

FIG. 1 is a configuration diagram of a battery management system 100 according to some embodiments of the present disclosure. The battery management system 100 may be configured to be able to monitor the voltage, current, temperature, etc., of battery cells in order to monitor the states of the battery cells and manage the charging and discharging of the battery.

Referring to FIG. 1, the battery management system 100 according to the present disclosure may include one or more battery management modules 120-1, 120-2, ..., and 120-N and a battery management master module 130. Here, each of the one or more battery management modules 120-1, 120-2, ..., and 120-N may be configured to be connected to a plurality of battery cells 110-1, 110-2, ..., and 110-N and monitor the states of the battery cells. Further, the battery management master module 130 may be configured to receive state information of battery cells associated with a corresponding battery management module from the one or more battery management modules 120-1, 120-2, ..., and 120-N.

According to some embodiments, the battery management system 100 may be configured such that the battery management master module 130 receives information associated with the states of the battery cells in a daisy-chain manner from the one or more battery management modules 120-1, 120-2, ..., and 120-N. As one example, a battery management module may accumulate state information of previous battery management modules and transmit it to the next battery management module. For example, the first battery management module 120-1 may receive state information of a first plurality of battery cells 110-1 and transmit it to the second battery management module 120-2. The second battery management module 120-2 may receive state information of the first plurality of battery cells 110-1 and a second plurality of battery cells 110-2 and transmit it to the next battery management module. The N-th battery management module 120-N may transmit state information of the first plurality of battery cells 110-1 through the N-th plurality of battery cells 110-N to the battery management master module 130. In another example, if a subsequent battery management module receives abnormal state information from a previous battery management module, the subsequent battery management module may transmit the abnormal state information to the battery management master module 130 in a chain manner. The specific method of transmitting the state information of the battery cells using the daisy chain method is not limited to the example described above and may be performed in various ways.

According to some embodiments, the battery management system 100 may be configured such that the battery management master module 130 directly receives state information of the battery cells and/or information associated with faults of the battery management modules from each of the battery management modules 120-1, 120-2, ..., and 120-N. For example, each of the battery management modules 120-1, 120-2, ..., and 120-N may be configured to be capable of communication connection with the battery management master module 130, and each of the battery management modules 120-1, 120-2, ..., and 120-N may transmit state information of the corresponding battery cells and/or information associated with a fault of the corresponding battery management module to the battery management master module 130. In some embodiments, each of the battery management modules 120-1, 120-2, ..., and 120-N may be communicatively connected to the battery management master module 130 via a communication line (e.g., controller area network (CAN) communication).

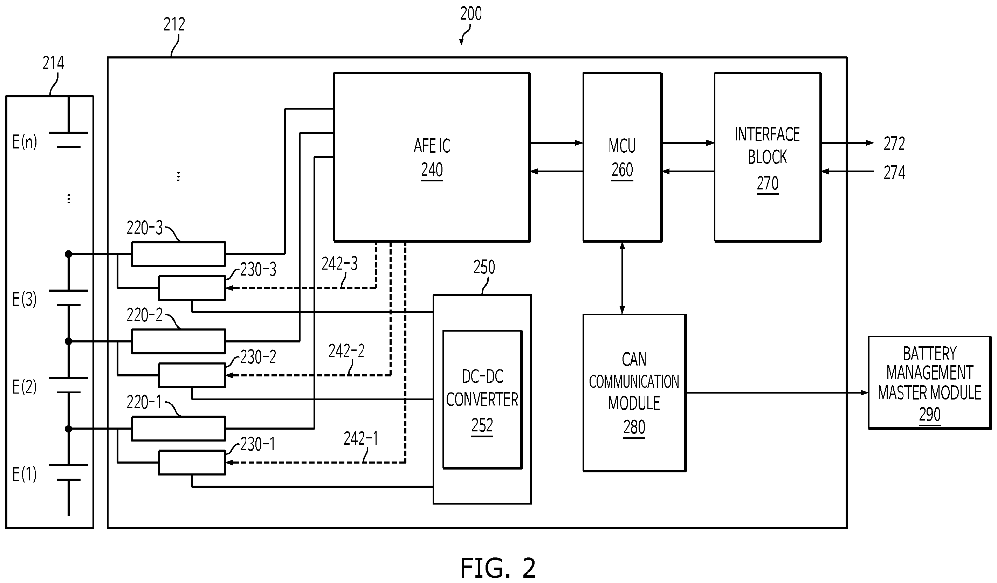

FIG. 2 is a diagram schematically showing the structure of a battery module according to some embodiments of the present disclosure.

Referring to FIG. 2, a battery management module 200 may include a plurality of battery cells 214 connected in series and a battery management module 212 connected to the plurality of battery cells 214. The battery management module 212 may include a plurality of sensors including a first sensor 220-1, a second sensor 220-2, and a third sensor 220-3, a plurality of switching elements including a (1-1)-th switching element 230-1, a (1-2)-th switching element 230-2, and a (1-3)-th switching element 230-3, an analog front-end integrated circuit (AFE IC) 240, a cell balancing circuit 250, a microcontroller unit (MCU) 260, an interface block 270, and a CAN communication module 280. In some embodiments, 1-1, 1-2, 1-3, etc. may alternatively or additionally be referred to as first, second, third, etc. as the disclosure is not so limited. While Figure 2 shows three sensors and three switching elements, it is to be understood that is by way of example only, and the battery management module may include additional sensors and corresponding switching elements.

In some embodiments, the first sensor 220-1, the second sensor 220-2, and the third sensor 220-3 may be connected to a first battery cell E(1), a second battery cell E(2), and a third battery cell E(3) of the plurality of battery cells 214, respectively, and generate voltage data associated with the first battery cell E(1), the second battery cell E(2), and the third battery cell E(3). For example, the plurality of sensors including the first sensor 220-1, the second sensor 220-2, and the third sensor 220-3 may be voltage sensors. The analog front-end integrated circuit 240 may be connected to the first sensor 220-1, the second sensor 220-2, and the third sensor 220-3. The analog front-end integrated circuit 240 may generate a plurality of first control signals including a (1-1)-th control signal 242-1, a (1-2)-th control signal 242-2, and a (1-3)-th control signal 242-3 based on the voltage data generated by the plurality of sensors including the first sensor 220-1, the second sensor 220-2, and the third sensor 220-3.

The (1-1)-th switching element 230-1 may be connected to the first battery cell E(1) and the analog front-end integrated circuit 240, and perform an on/off operation based on the (1-1)-th control signal 242-1. The (1-2)-th switching element 230-2 may be connected to the second battery cell E(2) and the analog front-end integrated circuit 240, and perform an on/off operation based on the (1-2)-th control signal 242-2. The (1-3)-th switching element 230-3 may be connected to the third battery cell E(3) and the analog front-end integrated circuit 240, and perform an on/off operation based on the (1-3)-th control signal 242-3. The (1-1)-th switching element 230-1, the (1-2)-th switching element 230-2, and the (1-3)-th switching element 230-3 may include MOSFETs (metal-oxide-semiconductor field-effect transistors), and the (1-1)-th control signal 242-1, the (1-2)-th control signal 242-2, and the (1-3)-th control signal 242-3 may be applied to the gate terminals of the (1-1)-th switching element 230-1, the (1-2)-th switching element 230-2, and the (1-3)-th switching element 230-3, respectively.

The microcontroller unit 260 may be connected to the analog front-end integrated circuit 240, the interface block 270, and the CAN communication module 280. The cell balancing circuit 250 may be connected to a plurality of first switching elements including the (1-1)-th switching element 230-1, the (1-2)-th switching element 230-2, and the (1-3)-th switching element 230-3, and perform balancing on the plurality of battery cells 214 according to the on/off operations of the plurality of first switching elements including the (1-1)-th switching element 230-1, the (1-2)-th switching element 230-2, and the (1-3)-th switching element 230-3. In some embodiments, the cell balancing circuit 250 may include a DC-DC converter 252.

The microcontroller unit 260 may transmit the state information of the corresponding battery cell as an alarm signal output 272 to a subsequent battery management module (not shown) via the interface block 270. Here, each of the state information of the battery cells associated with the previous battery management modules and the state information of the corresponding battery cell may include, but is not limited to, accumulated state information of the battery cells for the previous battery management modules connected in a daisy chain manner. In this circumstance, each of the first battery management module and the last battery management module may be connected to the battery management master module 290.

In some embodiments, the battery management module 212 may transmit the state information of the plurality of battery cells 214 (e.g., voltage, current, temperature, etc. of the battery cells etc.) and the state information of the battery management module 212 (e.g., the fault information of the battery management module, etc.) directly to the battery management master module 290. For example, the microcontroller unit 260 may transmit the state information of the plurality of battery cells 214 and the state information of the battery management module 212 to the battery management master module 290 via the CAN communication module 280. In this circumstance, all battery management modules may directly communicate with the battery management master module 290 via CAN communication.

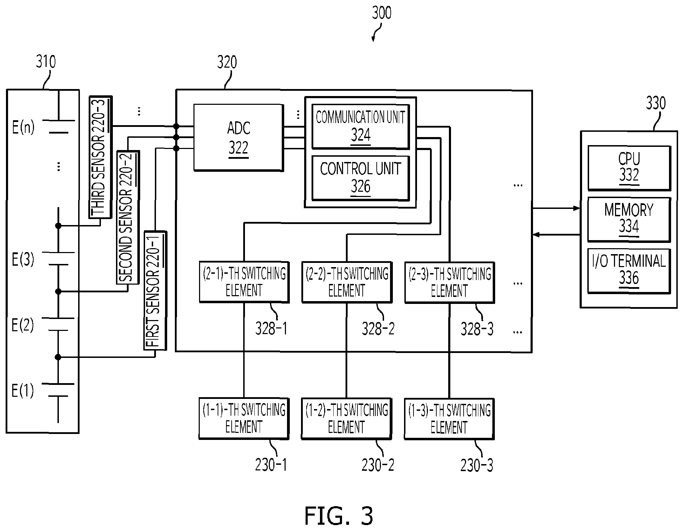

FIG. 3 is a diagram schematically showing the structure of an analog front-end integrated circuit 320 and a microcontroller unit 330 in a battery module 300 according to some embodiments of the present disclosure. Referring to FIG. 3, the battery module 300 may include a plurality of battery cells 310, the analog front-end integrated circuit 320, and the microcontroller unit 330.

The analog front-end integrated circuit 320 may include an analog-to-digital converter (ADC) 322, a communication unit 324, a control unit 326, and a plurality of switching elements including a (2-1)-th switching element 328-1, a (2-2)-th switching element 328-2, and a (2-3)-th switching element 328-3.

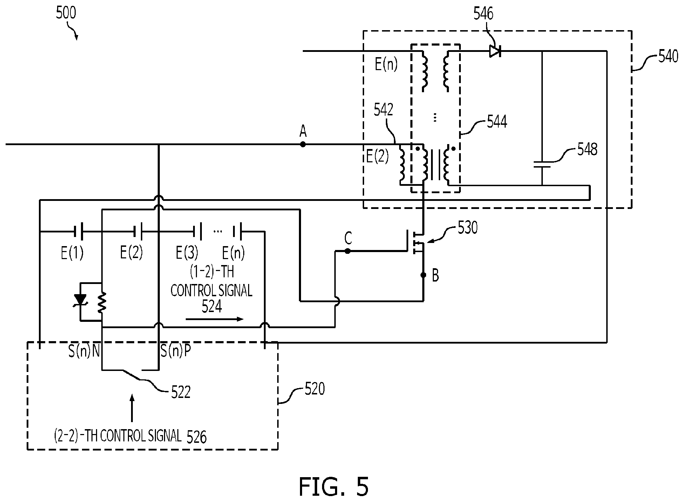

In some embodiments, the (2-1)-th switching element 328-1 may generate a (1-1)-th control signal 242-1 while repetitively turning on and off, the (2-2)-th switching element 328-2 may generate a (1-2)-th control signal 242-2 while repetitively turning on and off, and the (2-3)-th switching element 328-3 may generate a (1-3)-th control signal 242-3 while repetitively turning on and off. The analog-to-digital converter 322 may convert analog voltage data received from the plurality of sensors including the first sensor 220-1, the second sensor 220-2, and the third sensor 220-3 into digital signals. The communication unit 324 may transmit the digital signals received from the analog-to-digital converter 322 to the microcontroller unit 330, and may receive a plurality of second control signals including a (2-1)-th control signal, a (2-2)-th control signal, and a (2-3)-th control signal for controlling a plurality of second switching elements including the (2-1)-th switching element 328-1, the (2-2)-th switching element 328-2, and the (2-3)-th switching element 328-3 from the microcontroller unit 330. Details regarding the plurality of second control signals including the (2-1)-th control signal, the (2-2)-th control signal, and the (2-3)-th control signal will be described in detail later in relation to FIG. 5, etc. The communication unit 324 may include a communication controller, a transceiver circuit, a buffer memory, etc. The control unit 326 may control the plurality of second switching elements including the (2-1)-th switching element 328-1, the (2-2)-th switching element 328-2, and the (2-3)-th switching element 328-3 based on the plurality of second control signals including the (2-1)-th control signal, the (2-2)-th control signal, and the (2-3)-th control signal received from the microcontroller unit 330. The control unit 326 may include a controller, a process, a logic circuitry, digital signal processing (DSP) components, etc.

The microcontroller unit 330 may include an I/O terminal 336 capable of transmitting and receiving signals to and from the analog front-end integrated circuit 320, a memory 334 capable of storing the digital signals received from the analog front-end integrated circuit 320, and a CPU 332 capable of processing the digital signals received from the analog front-end integrated circuit 320. The microcontroller unit 330 may receive digital signals (e.g., a measured voltage value of each cell) from the communication unit 324 of the analog front-end integrated circuit 320, and detect a voltage imbalance state among the plurality of battery cells 310 based on the received digital signals. In this circumstance, the microcontroller unit 330 may calculate required voltage data for each battery cell for balancing among the plurality of battery cells 310 based on the detected imbalance state. Then, the microcontroller unit 330 may generate the plurality of second control signals including the (2-1)-th control signal, the (2-2)-th control signal, and the (2-3)-th control signal based on the calculated required voltage data, and transmit them to the communication unit 324 of the analog front-end integrated circuit 320.

In some embodiments, the microcontroller unit 330 may determine a particular battery cell having the highest voltage out of the plurality of battery cells 310 in order to detect a voltage imbalance state among the cells of the plurality of battery cells 310. Further, the microcontroller unit 330 may determine voltage differences between the particular battery cell having the highest voltage and the rest of the cells.

In some embodiments, to calculate the required voltage data for each battery cell, the microcontroller unit 330 may calculate the required voltage data for the rest of the battery cells to equalize the voltages of the plurality of battery cells 310 by distributing the energy of the particular battery cell having the highest voltage to the rest of the battery cells.

In a specific example, the microcontroller unit 330 may receive digital signals from the communication unit 324 of the analog front-end integrated circuit 320, and detect a voltage imbalance state among the plurality of battery cells 310 based on the received digital signals. Then, the microcontroller unit 330 may calculate required voltage data for each battery cell for balancing among the plurality of battery cells 310 based on the detected imbalance state. Then, the microcontroller unit 330 may generate the plurality of second control signals including the (2-1)-th control signal, the (2-2)-th control signal, and the (2-3)-th control signal based on the calculated required voltage data, and transmit them to the communication unit 324 of the analog front-end integrated circuit 320.

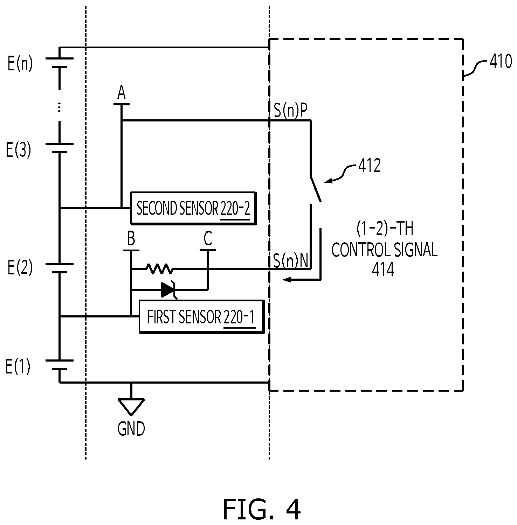

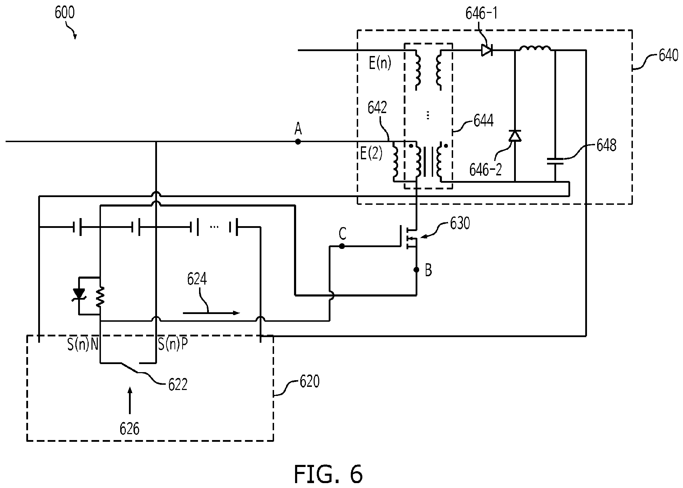

FIG. 4 is a diagram schematically showing a mechanism by which an analog front-end integrated circuit 410 generates a (1-2)-th control signal 414 according to some embodiments of the present disclosure. FIG. 5 is a diagram schematically showing a battery module 500 including a unit cell balancing circuit 540 according to some embodiments of the present disclosure. FIG. 6 is a diagram schematically showing a battery module including a unit cell balancing circuit 640 according to some embodiments of the present disclosure.

Referring to FIG. 4, the second sensor 220-2 may be connected to the cathode of the second battery cell E(2) and the anode of the third battery cell E(3). Similarly, the first sensor 220-1 may be connected to the cathode of the first battery cell E(1) and the anode of the second battery cell E(2). As described herein in FIGS. 1 to 3, the analog front-end integrated circuit 410 may receive voltage data from the second sensor 220-2 and may receive a (2-2)-th control signal from a microcontroller unit (not shown) and control a (2-2)-th switching element 412 according to the embodiment disclosed in FIG. 3. The (2-2)-th switching element 412 may generate the (1-2)-th control signal 414 by repetitively turning on and off. Below, the relationship between the (1-2)-th control signal 414, the (2-2)-th control signal, and the (2-2)-th switching element 412, etc., will be described in more detail in relation to FIGS. 5 and 6. While the description may be centered on the second battery cell E(2) in FIGS. 4 to 6, the rest of the battery cells may also be configured and operated similarly to the second battery cell E(2).

In some embodiments, one end s(n)P of the (2-2)-th switching element 412 may be connected to the node A, the second sensor 220-2, and the cathode terminal of the second battery cell E(2). Further, the other end s(n)N of the (2-2)-th switching element 412 may be connected to the node C (e.g., as shown in FIG. 4). Moreover, the node B may be connected to the first sensor 220-1, the cathode terminal of the first battery cell E(1), and the anode terminal of the second battery cell E(2). A resistor and a diode (e.g., a Zener diode) connected in parallel may be connected between the node B and the node C.

Referring to FIGS. 4 and 5, the battery module 500 may include a plurality of battery cells E(1), E(2), ..., and E(n), an analog front-end integrated circuit 520, a (1-2)-th switching element 530, and a cell balancing circuit 540.

In some embodiments, the analog front-end integrated circuit 520 may control a (2-2)-th switching element 522 based on a (2-2)-th control signal 526. The (2-2)-th switching element 522 may generate a (1-2)-th control signal 524 while repetitively turning on and off. The (1-2)-th switching element 530 may perform an on/off operation based on the (1-2)-th control signal 524.

The cell balancing circuit 540 may perform balancing on the plurality of battery cells E(1), E(2), ..., and E(n) according to the on/off operations of a plurality of first switching elements including the (1-2)-th switching element 530.

In some embodiments, the (1-2)-th control signal 524 may include a PWM (pulse-width modulation) signal. In this circumstance, the (2-2)-th control signal 526 may control the duty cycle of the PWM signal generated by the (2-2)-th switching element 522. Here, the duty cycle may refer to the ratio of on-cycles in one period of the PWM signal, for example, within the on-cycle and off-cycle, i.e., the ratio of the section in which the signal is present in one period. Further, the magnitude of the PWM signal in the (1-2)-th control signal 524 may be equal to the magnitude of the voltage of the second battery cell E(2). Here, the magnitude of the PWM signal may refer to the magnitude of the signal in the section in which the signal is present in one period. The (1-2)-th switching element 530 may control the input/output voltage ratio of the cell balancing circuit 540 based on the duty cycle of the (1-2)-th control signal 524. In some embodiments, the (1-2)-th control signal 524 may include a pulse-frequency modulation (PFM) signal, and the (2-2)-th control signal 526 may control the frequency of the PFM signal generated by the (2-2)-th switching element 522.

Further, the (1-2)-th switching element 530 may control the input/output voltage ratio of the cell balancing circuit 540 based on the frequency of the (1-2)-th control signal 524.

In some embodiments, the (1-2)-th switching element 530 may include a MOSFET (metal-oxide-semiconductor field-effect transistor). In this circumstance, the (1-2)-th control signal 524 may be applied to the gate terminal of the (1-2)-th switching element 530. Further, the drain terminal of the (1-2)-th switching element 530 may be connected to the cathode terminal of the second battery cell E(2), the second sensor 220-2, and one end s(n)P of the (2-2)-th switching element 522 via/by way of the cell balancing circuit 540. Moreover, the source terminal of the (1-2)-th switching element 530 may be connected to the anode terminal of the second battery cell E(2) and the first sensor 220-1. Furthermore, the gate terminal of the (1-2)-th switching element 530 may be connected to the other end s(n)N of the (2-2)-th switching element 522.

In some embodiments, one end s(n)P of the (2-2)-th switching element 522 may be connected to the cathode terminal of the second battery cell E(2) and the second sensor 220-2, and may be connected to one end (drain terminal) of the (1-2)-th switching element 530 by way of the cell balancing circuit 540. The other end s(n)N of the (2-2)-th switching element 522 may be connected to the other end (gate terminal) of the (1-2)-th switching element 530.

In the example shown in FIG. 5, the cell balancing circuit 540 may include an isolated DC-DC converter. The cell balancing circuit 540 may include a so-called flyback converter, which includes an inductor 542 connected to the (1-2)-th switching element 530, a transformer 544 connected in parallel with the inductor 542, a diode 546 connected in series with the transformer 544, and a capacitor 548 connected in parallel with the transformer 544.

In FIG. 6, the configurations that overlap with those in FIGS. 4 and 5 will be described briefly based on the embodiments shown in FIGS. 4 and 5 or omitted (e.g., integrated circuit 620 may be an analog front-end integrated circuit 520; control signal 626 may be a control signal as described in relation to (2-2)-th control signal 526; switching element 622 may be configured as (2-2)-th switching element 522; and control signal 624 may be a signal as described in relation to (1-2)-th control signal 524). Referring to FIG. 6, a cell balancing circuit 640 may include an isolated DC-DC converter. The cell balancing circuit 640 may include a so-called forward converter, which includes an inductor 642 connected to a (1-2)-th switching element 630, a transformer 644 connected in parallel with the inductor 642, a first diode 646-1 connected in series with the transformer 644, a second diode 646-2 connected in parallel with the transformer 644, and a capacitor 648 connected in parallel with the transformer 544.

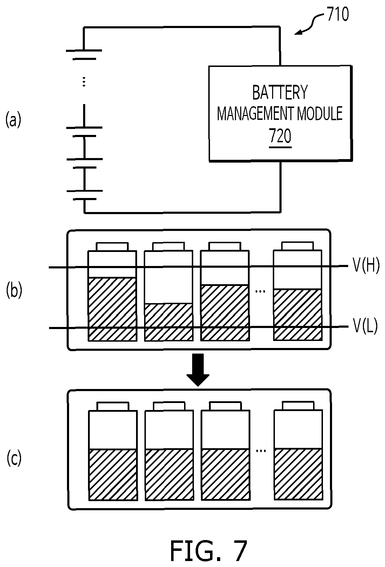

FIG. 7 is a diagram showing the mechanism of active cell balancing realized by a battery module according to some embodiments of the present disclosure. Referring to (a) in FIG. 7, efficient active cell balancing of a battery module 710 may be realized by a battery management module 720 according to the embodiments disclosed in FIGS. 1 to 6.

Referring to (b) in FIG. 7, a plurality of battery cells connected in series may have different charge/discharge states, e.g., different electric energies, within the range of a rated charge voltage V(H) and a rated discharge voltage V(L).

Referring to (c) in FIG. 7, by performing active cell balancing by applying the battery management module 720 disclosed in some embodiments of the present disclosure to the plurality of battery cells having different charge/discharge states as in (b), electric energy can be redistributed from battery cells having a higher electric energy to battery cells having a lower electric energy. Accordingly, capacity recovery for portions where all of the plurality of battery cells are not usable due to the electric energy deviation among the battery cells can be achieved.

According to some embodiments of the present disclosure disclosed in FIGS. 1 to 6, by utilizing the PWM signal generated by the analog front-end integrated circuit as a control signal for the switching elements connected outside the analog front-end integrated circuit, active cell balancing with high efficiency can be realized, and heat generation and noise of the analog front-end integrated circuit can be controlled effectively. The reduced heat generation also improves safety of operation of the battery module, including when forming a battery pack or energy storage system (ESS) by connecting the plurality of battery modules. Accordingly, a switching control method can be selected freely through the analog front-end integrated circuit, and a balancing circuit design utilizing various types of DC-DC converters can be possible. The active cell balancing also provides enhanced protection for the AFE IC, which might otherwise be damaged by increased balancing current due to the growing cell capacity and number of cells in battery modules. The lifespan of the AFE IC and battery module is thereby increased. Further, battery cell parameters can be measured accurately through electrochemical impedance spectroscopy (EIS), and battery cell voltage can be monitored accurately. Moreover, as active cell balancing is realized through the on/off operations of the switching elements connected to each of the plurality of battery cells, local balancing of desired battery cells can be realized, and the balancing speed can be controlled flexibly. Accordingly, a power semiconductor capable of controlling the balancing of a plurality (e.g., 20 or more) battery cells at once can be realized. Furthermore, heat generation and loss during the switching operation of the switching elements can be minimized through the balancing of the battery cell units. Further, because each analog front-end integrated circuit connected to a plurality of battery cell units senses the voltages of the plurality of battery cells, loss due to the detection of the operating state of the plurality of battery modules can be minimized. Accordingly, when forming a battery pack or energy storage system (ESS) by connecting the plurality of battery modules according to some embodiments of the present disclosure, the circuit design cost and time for each module can be reduced, and active cell balancing can be realized with a simple structure. Furthermore, since the active balancing described herein minimizes heat generation and excess energy dissipation, battery cells of higher capacity can be deployed, and a higher number of battery cells can be deployed within the battery module. As such, the battery module can be larger and provide improved energy storage.

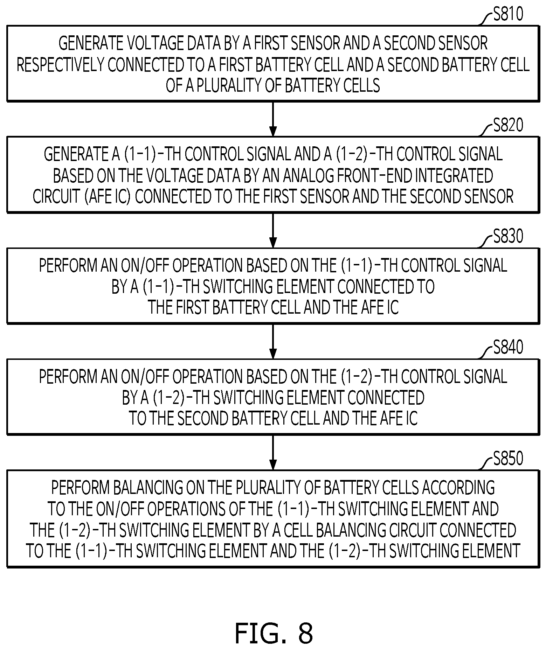

FIG. 8 is a flowchart showing a cell balancing method according to some embodiments of the present disclosure.

The cell balancing method may begin with a first sensor and a second sensor connected to a first battery cell and a second battery cell of a plurality of battery cells generating voltage data (act S810).

Then, an analog front-end integrated circuit (AFE IC) connected to the first sensor and the second sensor may generate a (1-1)-th control signal and a (1-2)-th control signal based on the voltage data (act S820).

In some embodiments, the generating of the (1-1)-th control signal and the (1-2)-th control signal may include converting, by an analog-to-digital converter (ADC) included in the AFE IC, the voltage data received from the first sensor and the second sensor into digital signals; generating, by an MCU, a (2-1)-th control signal and a (2-2)-th control signal based on the digital signals; generating, by a (2-1)-th switching element included in the AFE IC, the (1-1)-th control signal while repetitively turning on and off based on the (2-1)-th control signal; and generating, by a (2-2)-th switching element included in the AFE IC, the (1-2)-th control signal while repetitively turning on and off based on the (2-2)-th control signal.

Then, a (1-1)-th switching element connected to the first battery cell and the AFE IC may perform an on/off operation based on the (1-1)-th control signal (act S830). Further, a (1-2)-th switching element connected to the second battery cell and the AFE IC may perform an on/off operation based on the (1-2)-th control signal (act S840).

In some embodiments, a cell balancing circuit connected to the (1-1)-th switching element and the (1-2)-th switching element may perform balancing on the plurality of battery cells according to the on/off operations of the (1-1)-th switching element and the (1-2)-th switching element (act S850).

In some embodiments, the generating of the (2-1)-th control signal and the (2-2)-th control signal may include detecting a voltage imbalance state among the plurality of battery cells based on the digital signals, calculating required voltage data for each battery cell for balancing among the plurality of battery cells based on the detected imbalance state, and generating the (2-1)-th control signal and the (2-2)-th control signal based on the calculated required voltage data.

In some embodiments, the detecting of the voltage imbalance state among the plurality of battery cells may include determining a particular battery cell having the highest voltage out of the plurality of battery cells. Further, the calculating of the required voltage data for each battery cell may include calculating required voltage data for the rest of the battery cells to equalize the voltages of the plurality of battery cells by distributing the energy of the particular battery cell having the highest voltage to the rest of the battery cells.

In some embodiments, the (1-2)-th control signal may include a PWM (pulse-width modulation) signal. In this circumstance, the magnitude of the PWM signal may be equal to the magnitude of the voltage of the second battery cell. Further, the (2-2)-th control signal may control the duty cycle of the (1-2)-th control signal, and the (1-2)-th switching element may control the input/output voltage ratio of the cell balancing circuit based on the duty cycle of the (1-2)-th control signal.

In some embodiments, the (1-2)-th control signal may include a PFM signal. In this circumstance, the (2-2)-th control signal may control the frequency of the PFM signal generated by the (2-2)-th switching element, and the (1-2)-th switching element may control the input/output voltage ratio of the cell balancing circuit based on the frequency of the (1-2)-th control signal.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

## Claims

1. A battery module (200) comprising:
a plurality of battery cells (214);
a first sensor (220-1) and a second sensor (220-2) respectively connected to a first battery cell (E(1)) and a second battery cell (E(2)) of the plurality of battery cells (214) and configured to generate voltage data;
an analog front-end integrated circuit, hereafter AFE IC (240), connected to the first sensor (220-1) and the second sensor (220-2) and configured to generate a 1-1-th control signal (242-1) and a 1-2-th control signal (242-2) based on the voltage data;
a 1-1-th switching element (230-1) connected to the first battery cell (E(1)) and the AFE IC (240) and configured to perform an on/off operation based on the 1-1-th control signal (242-1);
a 1-2-th switching element (230-2) connected to the second battery cell (E(2)) and the AFE IC (240) and configured to perform an on/off operation based on the 1-2-th control signal (242-2);
a microcontroller unit, hereafter MCU (260), connected to the AFE IC (240); and
a cell balancing circuit (250) connected to the 1-1-th switching element (230-1) and the 1-2-th switching element (230-2) and configured to perform balancing on the plurality of battery cells (214) according to the on/off operations of the 1-1-th switching element (230-1) and the 1-2-th switching element (230-2).

2. The battery module (300) as claimed in claim 1, wherein the AFE IC (320) comprises:
a 2-1-th switching element (328-1) configured to generate the 1-1-th control signal (242-1) while repetitively turning on and off;
a 2-2-th switching element (328-2) configured to generate the 1-2-th control signal (242-2) while repetitively turning on and off;
an analog-to-digital converter, hereafter ADC (322), configured to convert voltage data received from the first sensor (220-1) and the second sensor (220-2) into digital signals;
a communication unit (324) configured to transmit the digital signals received from the ADC (322) to the MCU (330) and receive a 2-1-th control signal (328-1) and a 2-2-th control signal (328-2) that control the 2-1-th switching element (328-1) and the 2-2-th switching element (328-2) from the MCU (330); and
a control unit (326) configured to control the 2-1-th switching element (328-1) and the 2-2-th switching element (328-1) based on the 2-1-th control signal and the 2-2-th control signal received from the MCU.

3. The battery module (300) as claimed in claim 2, wherein the MCU (330) is configured to:
receive the digital signals from the communication unit (324) of the AFE IC (320),
detect a voltage imbalance state among the plurality of battery cells (310) based on the received digital signals,
calculate required voltage data for each battery cell for balancing among the plurality of battery cells (310) based on the detected voltage imbalance state, and
generate and transmit the 2-1-th control signal and the 2-2-th control signal to the communication unit (324) of the AFE IC (320), based on the calculated required voltage data.

4. The battery module 500 as claimed in claim 2 or claim 3, wherein the 1-2-th switching element (530) comprises a metal-oxide-semiconductor field-effect transistor, hereafter MOSFET, and wherein the 1-2-th control signal (524) is applied to a gate terminal of the 1-2-th switching element (530).

5. The battery module (500) as claimed in claim 4, wherein a drain terminal of the MOSFET is connected to a cathode terminal of the second battery cell (E(2)), the second sensor (220-2), and one end (s(n)P) of the 2-2-th switching element (522) by way of the cell balancing circuit (540).

6. The battery module (500) as claimed in claim 4 or claim 5, wherein a source terminal of the MOSFET is connected to an anode terminal of the second battery cell (E(2)) and the first sensor (220-1).

7. The battery module (500) as claimed in claim 5 or claim 6, wherein a gate terminal of the MOSFET is connected to another end (s(n)N) of the 2-2-th switching element (522).

8. The battery module (500) as claimed in claim 2, wherein one end (s(n)P) of the 2-2-th switching element (522) is connected to a cathode terminal of the second battery cell (E(2)) and the second sensor (220-2) and is connected to one end of the 1-2-th switching element (530) by way of the cell balancing circuit (540).

9. The battery module (500) as claimed in claim 8, wherein another end (s(n)N) of the 2-2-th switching element (522) is connected to another end of the 1-2-th switching element (530).

10. The battery module (500) as claimed in any preceding claim, wherein the cell balancing circuit (540) comprises an isolated DC-DC converter.

11. The battery module (300) as claimed in any one of claims 3 - 10, wherein detecting the voltage imbalance state among the plurality of battery cells (310) comprises determining a particular battery cell having a highest voltage out of the plurality of battery cells (310).

12. The battery module (300) as claimed in claim 11, wherein calculating the required voltage data for each battery cell comprises calculating required voltage data for a remainder of the battery cells to equalize voltages of the plurality of battery cells (310) by distributing energy of the particular battery cell having the highest voltage to the remainder of the battery cells.

13. The battery module (500) as claimed in claim 12, wherein the 1-2-th control signal 524 comprises a pulse-width modulation signal, hereafter PWM signal, and
wherein the 2-2-th control signal (526) controls a duty cycle of the PWM signal generated by the 2-2-th switching element (522).

14. The battery module (500) as claimed in claim 13, wherein the 1-2-th switching element (530) controls an input/output voltage ratio of the cell balancing circuit (240) based on the duty cycle of the 1-2-th control signal (524).

15. The battery module (500) as claimed in claim 13 or claim 14, wherein a magnitude of the PWM signal is equal to a magnitude of a voltage of the second battery cell (E(2)).
